# EUROPEAN PATENT APPLICATION

(11) **EP 2 879 247 A1**
(43) Date of publication of application: **03.06.2015**
(21) Application number: 13823242.6
(22) Date of filing: 13.06.2013
(51) Int. Cl.: H01R 31/06

(54) **TRANSMISSION DEVICE FOR AUDIO SIGNAL AND ELECTRONIC SIGNATURE TOOL**

(30) Priority: 26.07.2012 CN 201220366973 U
(71) Applicant: Tendyron Corporation, Beijing 100083 (CN)
(72) Inventor: LI, Dongsheng, Beijing 100083 (CN)
(74) Representative: Pizzoli, Antonio
(86) International application number: PCT/CN2013/077151
(87) International publication number: WO 2014/015720

(57) **Abstract**

Proposed is a transmission device for an audio signal, comprising: an audio interface, the audio interface comprising a first pin and a second pin, the first pin being a single-track audio output pin or being one of multi-track audio output pins, and the second pin being a ground pin; a data transmission interface, the data transmission interface being a USB interface or a DOCK interface; and an amplification module, the amplification module being coupled to the audio interface and the data transmission interface. The transmission device can ensure that an audio signal is transmitted smoothly, does not increase the power consumption, and is relatively low in cost. Also proposed is an electronic signature tool.

## Description

### FIELD

The present disclosure relates to an electronic technique field, and more particularly relates to a device for transmitting audio signals and an electronic signature token.

### BACKGROUND

An existing electronic product generally includes a USB (universal Serial BUS) interface, and a mobile terminal (such as a mobile phone terminal, a tablet personal computer) generally includes an audio interface. The audio interface is generally an interface for outputting or inputting audio signals. If the electronic product and the mobile terminal need to be connected, a signal output by the audio interface of the mobile terminal may be connected to the USB interface and converted, thus matching the mobile terminal including an audio interface and the electronic product including a USB interface.

Since the USB interface is special, it requires a sensitivity of 200 mv. However, 200 mv is too great for an audio signal.

Therefore, an audio signal output by the existing mobile terminal is too small, which may not satisfy the sensitivity requirement of the USB interface.

### SUMMARY

Embodiments of the present disclosure seek to solve at least one of the problems existing in the related art to at least some extent.

Accordingly, an objective of the present disclosure is to provide a device for transmitting audio signals, which ensures that the audio signals are transmitted successfully, a power consumption is not increased, and a cost is low.

Another objective of the present disclosure is to provide an electronic signature token.

In order to achieve the above objectives, embodiments of a first aspect of the present disclosure provide a device for transmitting audio signals. The device for transmitting audio signals comprises: an audio interface comprising a first pin and a second pin, the first pin being a single-channel audio output pin or one of multichannel audio output pins, the second pin being a ground pin; a data transmission interface being a USB interface or a DOCK interface; and an amplifying module coupled with the audio interface and the data transmission interface respectively.

With the device for transmitting audio signals according to embodiments of the present disclosure, the audio signal is amplified by the amplifying module before the audio signal is received by the data transmission interface. Therefore, it may be ensured that the audio signal output by the audio interface satisfies a receiving requirement of the data transmission interface and a data transmission quality is satisfied. In addition, a power consumption is not increased, and a cost is low.

Further, the data transmission interface comprises a third pin, a fourth pin, a fifth pin and a sixth pin. The third pin is a power pin, the fourth pin and the fifth pin are data transmission pins, and the sixth pin is a ground pin.

Further, the amplifying module further comprises: an amplifier defining a noninverting input terminal coupled with the first pin and an inverting input terminal coupled with the second pin, an input terminal of the amplifier bring coupled with one of the data transmission pins of the data transmission interface; and an impedance sub-module coupled between the first pin and the second pin.

If the amplifier and the impedance sub-module are configured as passive devices, no power consumption is generated when the amplifier and the impedance sub-module are working.

Specifically, the impedance sub-module may comprise a resistor, a loudspeaker, a transformer or an inductor.

The second pin of the interface is coupled with the sixth pin of the data transmission interface.

Furthermore, the audio interface further comprises a seventh pin being an MIC pin.

Preferably, the device further comprises a first attenuation circuit and a second attenuation circuit. The first attenuation circuit is coupled with the second pin and the other one of the data transmission pins respectively, and the second attenuation circuit is coupled with the seventh pin and the other one of the data transmission pins respectively.

The first attenuation circuit is a voltage-dividing circuit or a filtering circuit, and the second attenuation circuit is also a voltage-dividing circuit or a filtering circuit.

Moreover, the voltage-dividing circuit or the filtering circuit comprises a resistor and/or a capacitor.

In order to achieve the above objectives, embodiments of a second aspect of the present disclosure provide an electronic signature token comprising a device for transmitting audio signals according to embodiments of the first aspect of the present disclosure.

With the electronic signature token according to embodiments of the present disclosure, the audio signals may be transmitted successfully, and the quality of signal transmission is ensured.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions of embodiments made with reference to the drawings, in which:
Fig. 1 is a schematic diagram of a device for transmitting audio signals according to embodiments of the present disclosure;
Fig. 2 is a schematic diagram of a device for transmitting audio signals according to an embodiment of the present disclosure;
Fig. 3 is a schematic diagram of a device for transmitting audio signals according to another embodiment of the present disclosure;
Fig. 4 is a schematic diagram of a device for transmitting audio signals according to yet another embodiment of the present disclosure;
Fig. 5 is a schematic diagram of a device for transmitting audio signals according to a further embodiment of the present disclosure;
Fig. 6 is a schematic diagram of a device for transmitting audio signals according to a still further embodiment of the present disclosure;
Fig. 7 is a schematic diagram of a data transmission interface in a device for transmitting audio signals according to embodiments of the present disclosure; and
Fig. 8 is a schematic diagram of an electronic signature token according to embodiments of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied. Moreover, a structure in which a first feature is "on" a second feature may include an embodiment in which the first feature directly contacts the second feature, and may also include an embodiment in which an additional feature is formed between the first feature and the second feature so that the first feature does not directly contact the second feature.

In the present invention, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

Referring to the following descriptions and drawings, these and other aspects of the embodiments of the present disclosure will be apparent. In these descriptions and drawings, some specific approaches of the embodiments of the present disclosure are provided, so as to show some ways to perform the principle of the embodiments of the present disclosure, however it should be understood that the embodiment of the present disclosure is not limited thereby. Instead, the embodiments of the present disclosure comprise all the variants, modifications and their equivalents within the spirit and scope of the present disclosure as defined by the claims.

A device for transmitting audio signals and an electronic signature token according to embodiments of the present disclosure are described below with reference to the drawings.

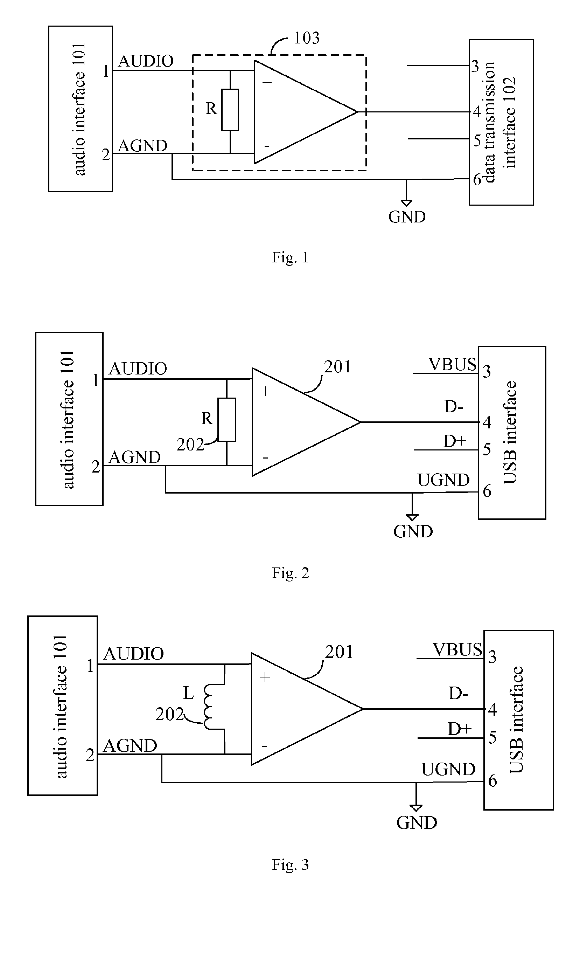

As shown in Fig. 1, a device for transmitting audio signals according to embodiments of a first aspect of the present disclosure includes an audio interface 101, a data transmission interface 102 and an amplifying module 103. The audio interface includes a first pin 1 and a second pin 2, the first pin 1 is a single-channel audio output pin AUDIO or one of multichannel audio output pins AUDIO, and the second pin is a ground pin AGND. In other words, when the audio output pin AUDIO includes a left-channel pin and a right-channel pin (i.e. a pin including stereo sounds), the left-channel pin or the right-channel pin is adopted. The amplifying module 103 is coupled with the audio interface 101 and the data transmission interface 102 respectively. It is to be illustrated that, a coupling includes a direct coupling and an indirect coupling, and the indirect coupling includes cases that two connecting parts are indirectly connected via other apparatus or circuits, in a condition that a technique principle of the a technical solution of the present disclosure is not affected. In other words, as shown in Fig. 1, an input terminal of the amplifying module 103 is connected with the audio interface 101, and an output terminal of the amplifying module 103 is connected with the data transmission interface 102.

Specifically, the data transmission interface 102 may be a USB interface or a DOCK interface.

As shown in Fig. 2, the data transmission interface 102 is a USB interface. The data transmission interface 102 includes a third pin 3, a fourth pin 4, a fifth pin 5 and a sixth pin 6, the third pin 3 is a power pin VBUS, the fourth pin 4 and the fifth pin 5 are data transmission pins D- and D+, and the sixth pin is a ground pin UGND.

Moreover, the ground pin AGND of the audio interface 101 is common-grounded GND with the ground pin UGND of the data transmission interface 102.

Further, as shown in Fig. 2, the amplifying module 103 further includes an amplifier 201 and an impedance sub-module 202. A noninverting input terminal (+) of the amplifier 201 is coupled with the first pin 1 of the audio interface 101, and an inverting input terminal (-) of the amplifier 201 is coupled with the second pin 2 of the audio interface 101. An output terminal of the amplifier 201 is coupled with one of the data transmission pins of the data transmission interface 102, for example, coupled with the fourth pin 4. The impedance sub-module 202 is coupled between the first pin AUDIO and the second pin AGND.

In some embodiments of the present disclosure, the impedance sub-module 202 may include at least one of a resistor, a loudspeaker, a transformer and an inductor.

Certainly, the output terminal of the amplifier 201 may be connected with the fifth pin 5 other than the fourth pin 4.

Preferably, as shown in Figs. 2 and 3, the impedance sub-module 202 may be a resistor R or an inductor L. Moreover, the second pin 2 of the audio interface 101 is coupled with the sixth pin 6 of the audio transmission interface 102.

In an embodiment of the present disclosure, a resistance of the resistor R ranges from 1Ω to 1kΩ, preferably from 10Ω to 100Ω.

Since the resistor R and the amplifier 201 are passive devices which have no power consumption during operation, the above-identified devices has no additional power consumptions.

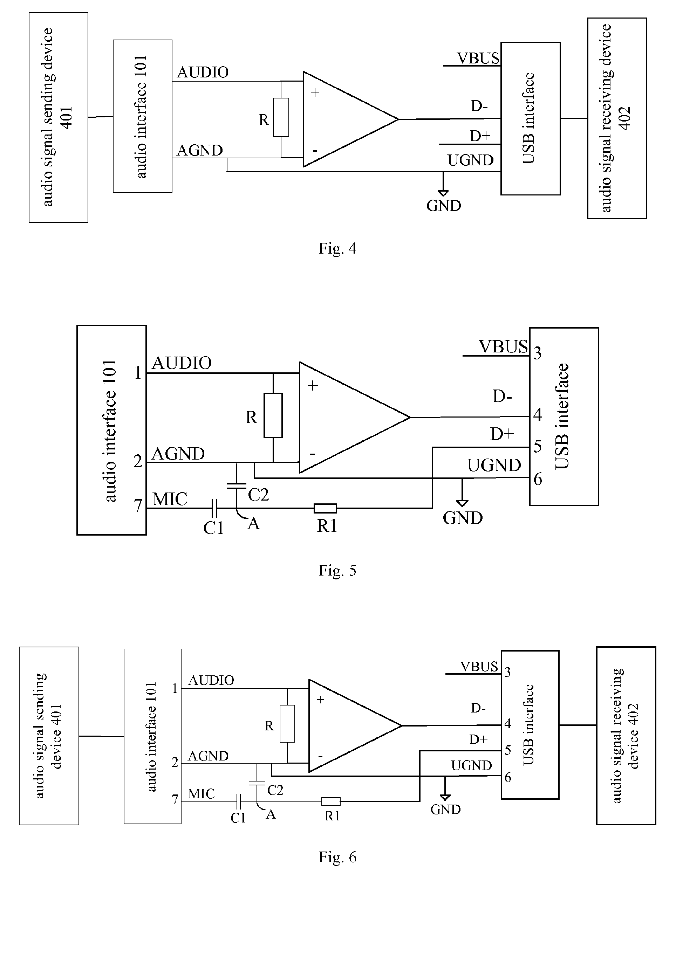

In an embodiment of the present disclosure, as shown in Fig. 4, the audio interface 101 is connected with an audio signal sending device 401, and the data transmission interface 102 such as a USB interface is connected with an audio signal receiving device 402.

It can be concluded that, with the device for transmitting audio signals according to embodiments of the present disclosure, a downlink transmission of the audio signal can be achieved, in which the downlink transmission refers to a transmission of the audio signal from the audio interface 101 to the data transmission interface 102.

In another embodiment of the present disclosure, as shown in Fig. 5, the audio interface 101 further includes a seventh pin 7. The seventh pin 7 is an MIC pin.

Moreover, as shown in Fig. 5, the above-identified device for transmitting audio signals further includes a first attenuation circuit and a second attenuation circuit. The first attenuation circuit is coupled with the second pin and the other one of the data transmission pins respectively, and the second attenuation circuit is coupled with the seventh pin and the other one of the data transmission pins respectively. In other words, as shown in Fig. 5, the first attenuation circuit is coupled with the second pin (the ground pin AGND) and the fifth pin D+ respectively, and the second attenuation circuit is coupled with the seventh pin (a microphone pin MIC) and the fifth pin D+ respectively.

The first attenuation circuit is a voltage-dividing circuit or a filtering circuit, and the second attenuation circuit is also a voltage-dividing circuit or a filtering circuit. Moreover, the voltage-dividing circuit or the filtering circuit comprises a resistor and/or a capacitor. In other words, as shown in Fig. 5, the first attenuation circuit includes a second capacitor C2 and a first resistor R1 connected in series, and the second attenuation circuit includes a first capacitor C1 and the first resistor R1 connected in series. Specifically, a first terminal of the first capacitor C1 is connected with the seventh pin 7 of the audio interface 101, a first terminal of the second capacitor C2 is connected with the second pin (the ground pin AGND), and a node A is defined between the first capacitor C1 and the second capacitor C2. A first terminal of the first resistor R1 is connected with the node A, and a second terminal of the first resistor R1 is connected with the fifth pin D+.

The first capacitor C 1 may have a capacitance ranging from 100 pF to 100 uF, and the second capacitor C2 may also have a capacitance ranging from 100 pF to 100 uF. The first resistor R1 may have a resistance ranging from 10 kΩ to 500 kΩ, and further, preferably from 50 kΩ to 100 kΩ.

It is to be illustrated that, in the device for transmitting audio signals according to embodiments of the present disclosure, the capacitor may be replaced with apparatus such as a resistor, while the resistor may also be replaced with apparatus such as a capacitor. Certainly, in the present disclosure, functions of the first attenuation circuit and the second attenuation circuit may be implemented by other kinds of voltage-dividing circuits or filtering circuits. According to the present embodiment, the microphone pin MIC of the audio interface 101 is connected with the fifth pin D+ of the USB interface, which ensures an uplink transmission (i.e. from the data transmission interface 102 to the audio interface 101) of the audio signals.

It is to be understood that, in the present embodiment, when the output terminal of the amplifier 201 is connected with the fifth pin D+ of the USB interface, the microphone pin MIC of the audio interface 101 may also be connected with the fourth pin D- of the USB interface.

In yet another embodiment of the present disclosure, as shown in Fig. 6, the audio interface 101 is connected with the audio signal sending device 401, and the data transmission interface 102 such as a USB interface is connected with the audio signal receiving device 402.

Therefore it can be seen that, with the device for transmitting audio signals according to embodiments of the present disclosure, a downlink transmission of audio signals may be achieved.

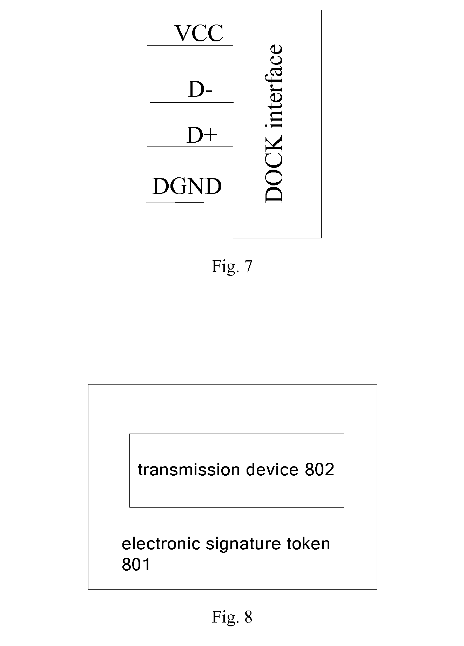

In a further embodiment of the present disclosure, the USB interface in the above-identified embodiment is replaced with a DOCK interface, as shown in Fig. 7. The DOCK interface includes a power pin VCC, data transmission pins D-, D+, and a ground pin DGND. The DOCK interface may be a 30 pin connector.

With the device for transmitting audio signals according to embodiments of the present disclosure, the audio signal is amplified by the amplifying module before the audio signal is received by the data transmission interface. Therefore, it may be ensured that the audio signal output by the audio interface satisfies a receiving requirement of the data transmission interface and a data transmission quality is satisfied. In addition, a power consumption is not increased, and a cost is low.

As shown in Fig. 8, embodiments of a second aspect of the present disclosure provide an electronic signature token 801 including the above-identified device 802 for transmitting audio signals.

With the electronic signature token according to embodiments of the present disclosure, the audio signals may be transmitted successfully, and the quality of signal transmission is ensured.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases such as "in an embodiment," "in some embodiments," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments of the present disclosure have been shown and described, it would be appreciated by those skilled in the art that changes, modifications, alternatives, and variations can be made in the embodiments without departing from the spirit, principles and scope of the present disclosure, and the scope of the present disclosure is defined by the claims and equivalents thereof.

## Claims

1. A device for transmitting audio signals, comprising:
an audio interface comprising a first pin and a second pin, the first pin being a single-channel audio output pin or one of multichannel audio output pins, the second pin being a ground pin;
a data transmission interface being a USB interface or a DOCK interface; and
an amplifying module coupled with the audio interface and the data transmission interface respectively.

2. The device according to claim 1, wherein the data transmission interface comprises a third pin, a fourth pin, a fifth pin and a sixth pin, the third pin is a power pin, the fourth pin and the fifth pin are data transmission pins, and the sixth pin is a ground pin.

3. The device according to claim 1 or 2, wherein the amplifying module comprises:
an amplifier defining a noninverting input terminal coupled with the first pin and an inverting input terminal coupled with the second pin, an output terminal of the amplifier being coupled with one of the data transmission pins of the data transmission interface; and
an impedance sub-module coupled between the first pin and the second pin.

4. The device according to claim 3, wherein the impedance sub-module comprises at least one of a resistor, a loudspeaker, a transformer, and an inductor.

5. The device according to claim 2, wherein the second pin of the audio interface is coupled with the sixth pin of the data transmission interface.

6. The device according to claim 3, wherein the audio interface further comprises a seventh pin being an MIC pin.

7. The device according to claim 6, further comprising:
a first attenuation circuit and a second attenuation circuit, wherein
the first attenuation circuit is coupled with the second pin and the other one of the data transmission pins respectively, and
the second attenuation circuit is coupled with the seventh pin and the other one of the data transmission pins respectively.

8. The device according to claim 7, wherein the first attenuation circuit is a voltage-dividing circuit or a filtering circuit, and the second attenuation circuit is a voltage-dividing circuit or a filtering circuit.

9. The device according to claim 8, wherein the voltage-dividing circuit or the filtering circuit comprises a resistor and/or a capacitor.

10. An electronic signature token comprising a device for transmitting audio signals according to any of claims 1-9.
